# EUROPÄISCHE PATENTSCHRIFT

(11) **EP 3 453 489 B1**
(45) Veröffentlichungstag und Bekanntmachung des Hinweises auf die Patenterteilung: **20.01.2021**
(21) Anmeldenummer: 18188623.5
(22) Anmeldetag: 13.08.2018
(51) Int. Cl.: B25B 23/145, B25B 29/02, B23P 19/06

(54) **VERFAHREN ZUM DOKUMENTIERTEN ANZIEHEN ODER NACHZIEHEN EINER SCHRAUBVERBINDUNG**
METHOD FOR DOCUMENTED TIGHTENING OR RETIGHTENING A SCREW CONNECTION
PROCÉDÉ DE VISSAGE OU DE DÉVISSAGE ATTESTÉ D'UN RACCORD À VIS

(30) Priorität: 28.08.2017 DE 102017119676
(43) Veröffentlichungstag der Anmeldung: 13.03.2019
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen Patentanwälte

(56) Entgegenhaltungen:
- EP-A2- 2 687 320
- WO-A1-2010/054959

## Beschreibung

Die Erfindung betrifft ein Verfahren zum dokumentierten Anziehen oder Nachziehen einer aus einem Gewindebolzen und einer darauf aufgeschraubten Mutter bestehenden, hochbelasteten Schraubverbindung unter Einsatz einer axial arbeitenden, vorzugsweise hydraulisch angetriebenen Spannvorrichtung und einer mit einem Dokumentationsmodul versehenen Prozesssteuereinheit.

Bei dem Verfahren wird die Schraubverbindung durch Scannen einer an der Schraubverbindung vorhandenen Kennung, vorzugsweise einer Barcode-Kennung, identifiziert. Die so ermittelten Daten werden in dem Dokumentationsmodul gespeichert. Mittels der Spannvorrichtung wird die Schraubverbindung durch axialen Zug am Gewindeende des Gewindebolzens längsgedehnt, und die dabei aufgewendete Anzugskraft und/oder der Anzugsdruck wird in dem Dokumentationsmodul gespeichert. Nach dem Längsdehnen wird die Mutter unter Verwendung eines Handdrehmomentschlüssels beigedreht, und das dabei tatsächlich aufgewendete Handdrehmoment wird in dem Dokumentationsmodul gespeichert.

Hydraulisch betriebene Bolzenspannvorrichtungen sind aus dem Stand der Technik gut bekannt, beispielsweise aus der WO 2008/092768 A2, der WO 2010/054959 A1 oder der DE 10 2015 104 133 A1. Bei derartigen Spannvorrichtungen wird zum Verspannen des Bolzens zunächst eine Wechselbuchse auf den (Gewinde)bolzen aufgeschraubt oder so mit diesem in Eingriff gebracht. Dazu kann die Wechselbuchse mit einem entsprechenden Innengewinde versehen sein. Die Wechselbuchse ist innerhalb eines hydraulischen Zylindergehäuses angeordnet und von zumindest einem die Wechselbuchse mitnehmenden Kolben umgeben. Der Kolben kann, beispielsweise als Teil einer hydraulischen KolbenZylindereinheit, die Wechselbuchse axial mitnehmen. Dadurch wird der zu verspannende Bolzen axial gedehnt. Während er gedehnt ist, kann eine den Bolzen gegenüber einem Maschinenteil abstützende Mutter nachgezogen, d.h. beigedreht werden.

Die EP 2 687 320 A2 zeigt ein hydraulisches Spannverfahren, bei dem das Handdrehmoment, welches durch das Beidrehen der Mutter mit einem Handdrehmomentschlüssel bewirkt wird, nicht in der Dokumentatino gespeichert wird.

Häufig werden die dabei tatsächlich verwendeten Betriebsparameter sowie allgemeine den jeweiligen Schraubfall betreffende Daten nicht erfasst und dokumentiert. Bei solchen Daten kann es sich beispielsweise um das Fabrikat, die Art oder den Typ des Bolzens oder der Mutter, sowie um Anzugs- und Drehmomentwerte der Bolzen und/oder Muttern handeln. Häufig fehlt es den Bolzenspannvorrichtungen an geeigneten Einrichtungen zum Erfassen und Dokumentieren solcher Daten. Des Weiteren fehlt es häufig an Maßnahmen, um solche Daten auszuwerten, überprüfbar zu machen und sicher abzuspeichern. Dies kann gerade bei Schraubverbindungen von Relevanz sein, bei denen eine permanente Kontrolle notwendig ist und aus Sicherheitsgründen eine ausreichend feste Schraubverbindung nachgewiesen werden muss, beispielsweise bei Reaktor- oder Lagerbehältern mit chemischen oder nuklearen Gefahrgütern.

Problematisch kann ferner sein, wenn dem Bediener der Bolzenspannvorrichtung zunächst nicht bekannt ist, in welchem Bereich der notwendige oder ideale hydraulische Druck und der damit verbundene Anzugsdruck bzw. die Anzugskraft für den zu verspannenden Bolzen liegt. Die Werte können je nach Art, Fabrikat oder Größe des Bolzens variieren. Im Zweifel kann dies dazu führen, dass der Bolzen mit überhöhten Zugbelastungen beaufschlagt wird, die letztlich zu einem Ausbrechen bzw. Hinausschleudern des Gewindebolzens führen können. Nebst diesen die Betriebssicherheit beeinflussenden Faktoren kann auch die Qualität und Präzision des An- oder Nachziehvorgangs gemindert sein, sofern die Bolzen nicht mit der idealen Anzugskraft beaufschlagt werden. Gleiches gilt für die Verwendung eines nicht idealen Drehmoments beim Beidrehen der Mutter.

Die Informationsbeschaffung durch das Auslesen von Kennungen, beispielsweise Barcodes, durch geeignete Sensoren bzw. Scanner ist allgemein bekannt. So können Bauteile, Plakate, Werbetafeln etc. mit Kennungen versehen sein, die dann mit einem geeigneten Scanner erfasst und ausgelesen werden. Nach der Identifizierung können spezifische, dem jeweiligen Barcode hinterlegte Informationen, abgerufen werden. Standardmäßig sind solche Barcode-Scanner in modernen Telekommunikationsgeräten integriert. Denn dort übernimmt die Kamera in Verbindung mit einer geeigneten Applikationsoftware (App) die Funktion eines solchen Barcode-Scanners. Barcode-Scanner als separate Geräte sind beispielsweise aus dem Einzelhandel zum Scannen der Einkäufe an der Kasse bekannt. Entscheidend ist, dass die Barcode-Scanner mit einer Lichtquelle versehen sind und während des Scanvorgangs beabstandet zum Scanobjekt positioniert werden. Der Barcode muss sich jedoch im Einfalls- bzw. Belichtungsbereichs des Objektivs bzw. des Scanners befinden. Häufig ist die Positionierung des Scanners relativ zum Scanobjekt winkelunabhängig. Von dem idealen Positionierwinkel zwischen Scanner und Barcode abweichende Anordnungen können gegebenenfalls durch geeignete Fokussieroptiken kompensiert werden.

Der Erfindung liegt die **Aufgabe** zugrunde, beim An- oder Nachziehen von hochfesten Schraubverbindungen mit axial arbeitenden Spannvorrichtungen eine Schraubfall-spezifische Datendokumentation zu ermöglichen und so die Betriebssicherheit, Qualität und Reproduzierbarkeit des Schraubprozesses zu verbessern.

Zur **Lösung** dieser Aufgabe wird ein Verfahren gemäß Patentanspruch 1 vorgeschlagen.

Wie eingangs beschrieben, handelt es sich um ein Verfahren zum dokumentierten Anziehen oder Nachziehen einer aus einem Gewindebolzen und einer darauf aufgeschraubten Mutter bestehenden, hochbelasteten Schraubverbindung unter Einsatz einer axial arbeitenden, vorzugsweise hydraulisch angetriebenen Spannvorrichtung und einer mit einem Dokumentationsmodul versehenen Prozesssteuereinheit, bei dem
1) die Schraubverbindung durch Scannen einer an der Schraubverbindung vorhandenen Kennung, vorzugsweise einer Barcode-Kennung, identifiziert wird und die so ermittelten Daten in dem Dokumentationsmodul gespeichert werden;
2) mittels der Spannvorrichtung die Schraubverbindung durch axialen Zug am Gewindeende des Gewindebolzens längsgedehnt wird und die dabei aufgewendete Anzugskraft und/oder der Anzugsdruck in dem Dokumentationsmodul gespeichert wird;
3) nach dem Längsdehnen die Mutter unter Verwendung eines Handdrehmomentschlüssels beigedreht wird und das dabei tatsächlich aufgewendete Handdrehmoment in dem Dokumentationsmodul gespeichert wird.

Unter Einsatz des Verfahrens werden verschiedene, dem jeweiligen Schraubfall zugrunde liegende Daten sicher dokumentiert und reproduzierbar abgespeichert. Die Daten können allgemeiner Natur sein und beispielsweise die Herstellerbezeichnung, das Fabrikat, die Artikelnummer, die Art, den Typ oder physikalisch-technische Parameter der Schraubverbindung umfassen. Die Daten können sich auf den Gewindebolzen oder auch auf die Mutter beziehen.

Nach dem Scannen der Schraubverbindung wird diese identifiziert und das Identifikationsergebnis in dem Dokumentationsmodul gespeichert. In dem Dokumentationsmodul kann der identifizierten Schraubverbindung zusätzlich ein Datum, eine Uhrzeit, eine Projektnummer oder andere Daten zugeordnet werden., und diese können mit abgespeichert werden.

Die Daten werden in einer gemeinsamen Datei gespeichert, die u.a. auf einem externen Server, einer externen Recheneinheit oder in einer Datencloud abgelegt werden können. Gleiches gilt für die aufgewendete Anzugskraft und/oder den Anzugsdruck, wie auch für das tatsächlich aufgewendete Handdrehmoment, also sämtliche Daten, die in dem Dokumentationsmodul gespeichert werden. Alle Daten können in einer einzigen Datei oder in mehreren verschiedenen Dateien abgespeichert werden. Die Dokumentation der Daten ermöglicht eine nachträglich jederzeit überprüfbare Qualitäts- und Zustandsüberprüfung der Schraubverbindung, insbesondere eine Verlaufskontrolle über eine längere Periode.

In einer vorteilhaften Ausgestaltung der Erfindung wird dem Bediener nach der Identifikation der Schraubverbindung eine in einer Datenbank gespeicherte Anzugskraft und/oder ein Anzugsdruck von der Prozesssteuereinheit vorgeschlagen, bevor der Anzugsvorgang vom Bediener gestartet wird. Die Prozesssteuereinheit kann dazu auf eine elektronische Datenbank zugreifen. In der Datenbank können für die jeweilig identifizierte Schraubverbindung optimale oder zu empfehlende Werte und/oder Wertebereiche für Anzugskräfte und/oder Anzugsdrücke abgespeichert sein. Durch die Verwendung der so vorgeschlagenen Parameter kann ein sichereres und/oder optimiertes Anziehen der Schraubverbindung gewährleistet werden.

Eine zusätzliche Sicherheitsstufe wird dadurch geschaffen, dass der Bediener den Beginn des Anzugsvorgangs nach dem automatischen Vorschlag der Betriebsparameter manuell bestätigen bzw. starten muss.

Sollte der Bediener hingegen aufgrund eigener Erfahrung eine andere Anzugskraft und/oder Anzugsdruck bevorzugen, stimmt er dem Parametervorschlag der Prozesssteuereinheit nicht zu. Er kann dann manuell einen anderen Wert eingeben und den Anzugsvorgang initiieren, was dann ebenfalls in dem Dokumentationsmodul dokumentiert wird.

Der Bediener bzw. Nutzer kann über eine Eingabeeinheit, z. B. über einen Touchscreen oder ein externes Bediengerät der Prozesssteuereinheit, manuell alle relevanten Daten eingeben. Der Touchscreen bzw. das Bediengerät kann zugleich Anzeigeeinheit sein. Damit kann der Verschraubungsprozess visuell verfolgt und kontrolliert werden.

Gemäß einer weiteren Ausgestaltung der Erfindung wird nach Identifikation der Schraubverbindung eine in der Datenbank gespeicherte Anzugskraft und/oder ein Anzugsdruck automatisch von der Prozesssteuereinheit ausgewählt und eine Pumpe der hydraulischen Schraubenspannvorrichtung automatisch auf diesen Druck gefahren. Die Pumpe stellt den Druck in der hydraulisch angetriebenen Spannvorrichtung ein, und ist mit dieser über entsprechende Zu- und Ableitungen verbunden. Die Pumpe kann signaltechnisch mit der Prozesssteuereinheit verbunden sein.

Es ist vorteilhaft, wenn nach Identifikation der Schraubverbindung mittels der Prozesssteuereinheit eine in der Datenbank gespeicherte Anzugskraft und/oder ein Anzugsdruck automatisch von der Prozesssteuereinheit ausgewählt, und der Anzugsvorgang unter Verwendung der ausgewählten Werte automatisch gestartet wird.

Zur Durchführung des erfindungsgemäßen Verfahrens, wird unter anderem eine Spannvorrichtung verwendet. Diese umfasst ein als hydraulischer Zylinder ausgebildetes Zylindergehäuse, eine in dem Zylindergehäuse angeordnete Wechselbuchse, die an ihrem dem Gewindebolzen zugewandten Ende mit einem Innengewinde versehen und auf den Gewindebolzen aufschraubbar ist, und mindestens einen in dem Zylindergehäuse axial bewegbaren, mit einer Hydraulikversorgung verbindbaren Kolben, durch den die Wechselbuchse zentral hindurchführt und vermöge dessen die Wechselbuchse axial mitnehmbar ist. Das Zylindergehäuse oder ein damit verbundenes Bauteil kann sich an einer Unterlage, beispielsweise einem Maschinenelement als Widerlager abstützen. Insbesondere bei der Verwendung einer derartigen hydraulischen Spannvorrichtung ist das erfindungsgemäße Verfahren von Vorteil. Denn beim Dehnen des Gewindebolzens durch Zug an dessen Gewindeendabschnitt treten enorme Kräfte auf. Eine Dokumentation der aufgewendeten Anzugskräfte und/oder der hydraulischen Anzugsdrücke kann im Rahmen einer Sicherheitsdokumentation bzw. Parameterüberwachung von besonderem Vorteil für die Betriebssicherheit sein.

Bei hohen Anzugskräften und/oder Anzugsdrücken besteht insbesondere die Gefahr eines Herausspringens oder Herausschnellens des Gewindebolzens. Auch kann es vorkommen, dass sich die Wechselbuchse in einem solchen Fall vom Gewinde des Bolzens löst und ebenfalls herausschnellt. Um solche Fälle zu vermeiden, kann eine automatische Auswahl von für die identifizierte Schraubverbindung geeigneten und/oder optimalen Anzugskräften und/oder Anzugsdrücken vorteilhaft sein, sei es mit oder ohne nachfolgende Freigabeerfordernis durch den Nutzer.

Von Vorteil ist ferner, die Wechselbuchse mit dem ohnehin in dem erfindungsgemäßen Verfahren verwendeten Handdrehmomentschlüssel auf den Gewindebolzen aufzuschrauben. Somit werden mit dem Aufschrauben der Wechselbuchse auf den Bolzen und dem Beidrehen der Mutter gleich zwei wesentliche Schritte des erfindungsgemäßen Verfahrens mit Hilfe ein- und desselben Werkzeugs verwirklicht. Bei dem Handdrehmomentschlüssel kann es sich um einen elektronischen Handdrehmomentschlüssel handeln.

Es ist vorteilhaft, die Kennung mit einem Sensor zu scannen, insbesondere einem Barcodescanner. Dabei kann es sich um einen optischen Sensor handeln. Der Sensor kann Bestandteil der Spannvorrichtung, des Handdrehmomentschlüssels oder eines separaten Geräts sein. Optische Sensoren sind in der Regel relativ kostengünstig, leicht anzubringen und leicht zu bedienen. Dies erleichtert die Implementierung eines solchen Sensors in der Spannvorrichtung oder an dem Handdrehmomentschlüssel. Der Sensor bzw. Barcodescanner kann beispielsweise außen an der Spannvorrichtung oder innerhalb der Spannvorrichtung angeordnet werden. Außen kann die Befestigung an dem Zylindergehäuse, und innen an der Wechselbuchse erfolgen.

Befindet sich der Sensor an dem Handdrehmomentschlüssel, kann der Sensor dort an beliebiger Position angeordnet werden. Wichtig ist allerdings, dass der Sensor nicht durch die mechanisch wirkenden Elemente des Handdrehmomentschlüssels, z. B. den Mehrkant, beschädigt wird. Eine Anordnung des Sensors am Handdrehmomentschlüssel kann Vorteile hinsichtlich der Flexibilität und der Handhabbarkeit des Scanners haben. Denn der Handdrehmomentschlüssel ist von geringerem Gewicht und schmalerer Geometrie als die Spannvorrichtung.

Der Sensor kann stationär angeordnet oder lösbar befestigt werden. Eine lösbare Anordnung hat den Vorteil den Sensor regelmäßig warten und bei Beschädigung austauschen zu können. Es gilt zu beachten, den Sensor beim Scannen des Barcodes in der Nähe des Barcodes zu positionieren oder zu halten, nämlich derart, dass sich der Barcode innerhalb des Bestrahlungsbereichs, Belichtungsbereichs bzw. Detektionsbereichs des optischen Sensors befindet. Der Scan erfolgt in der Regel kontaktlos, d.h. der Sensor kann sich in einem Abstand zum Barcode befinden.

Ferner kann der Sensor unmittelbarer Bestandteil einer die Prozesssteuereinheit umfassenden Recheneinheit sein. In diesem Fall kann es vorteilhaft sein, wenn es sich bei dem Sensor um eine Kamera handelt.

Die Recheneinheit ist bevorzugt ein mobiler Computer, insbesondere eignen sich hierzu Tablet-Computer, Smartphones oder andere Rechenmodule. Wichtig ist, dass die Recheneinheit sowohl über eine Anzeigeeinheit als auch über eine Eingabeeinheit verfügt. Anzeigeeinheit und Eingabeeinheit können gemeinsam in einem Touch-Screen verwirklicht sein. Zudem kann die Eingabeeinheit in Form einer Tastatur oder Tasten ausgebildet sein. Auch die Verwendung stationärer Computer als Recheneinheit ist vorstellbar. In jedem Falle ist der Sensor signaltechnisch mit der Prozesssteuereinheit verbunden.

Die Spannvorrichtung und/oder der Handdrehmomentschlüssel und/oder das separate Gerät können erfindungsgemäß mit einer signaltechnisch mit der Prozesssteuereinheit verbundenen Sende- und Empfangseinheit versehen sein, vermöge der ein Datenaustausch mit der Prozesssteuereinheit erfolgt. Dann können die jeweiligen, dem Scan-, Anzugs- und Beidrehvorgang zugrunde liegenden Daten an die Prozesssteuereinheit weitergeleitet und ausgehend von dieser entsprechende Daten an die jeweilige Sende- und Empfangseinheit der Spannvorrichtung oder des Handdrehmomentschlüssels gesendet werden.

Auch die Prozesssteuereinheit weist eine Sende- und Empfangseinheit auf. Die Sende- und Empfangseinheit kann beispielsweise eine elektrische Platine mit Sende- und Empfangsmodul sein. Die Sende- und Empfangseinheiten können kabellos oder kabelgebunden miteinander in Signalverbindung stehen. Geeignet sind beispielsweise WLAN, Funk oder UMTS Verbindungen. Nahezu jede moderne kabellose Signalübertragungsform kann sich hierzu eignen. Auch können elektronische Verbindungswege über Leiterplatten oder Platinen ausreichen, solange die Verbindungswege die verschiedenen Bauteile miteinander koppeln.

Vorteilhaft ist es, wenn die Prozesssteuereinheit sowie der Sensor mit einem gemeinsamen Applikationsprogramm gesteuert werden. Dieses kann beispielsweise auf der Recheneinheit installiert sein. Die Recheneinheit und die externe Hydraulikversorgung samt Pumpe können beispielsweise auf einem Rollwagen angeordnet sein.

Gemäß einer weiteren Ausgestaltung der Erfindung kann die aufgewendete Anzugskraft oder der Anzugsdruck von einem Drucksensor und/oder einem Kraftsensor gemessen werden. Dazu können auch mehrere Druck- und/oder Kraftsensoren verwendet werden. Die Druck- und/oder Kraftsensoren können unmittelbarer Bestandteil der Hydraulikversorgung sein.

Auch können zusätzlich Sensoren zur Messung der Schraubenlängung bei dem erfindungsgemäßen Verfahren verwendet werden. Auch ist ein entsprechender Sensor zur Messung des tatsächlich aufgewendeten Drehmoments an dem Handdrehmomentschlüssel vorgesehen.

Mit einer weiteren Ausgestaltung des Verfahrens wird vorgeschlagen, dass das Beidrehen der Mutter mittels eines an der Spannvorrichtung angeordneten Getriebes erfolgt, wobei dieses Getriebe mit einem Drehwinkelsensor versehen ist. Dieser Sensor erfasst einen Drehwinkel, welcher während des Beidrehens zurückgelegt wird. Dieser Drehwinkel kann der Drehwinkel der Mutter selbst sein, oder ein anderer charakteristischer Drehwinkel, den zum Beispiel eines der Elemente des Beidreh-Getriebes ausführt. Der so erfasste Winkelwert wird ebenfalls gespeichert, wozu der Drehwinkelsensor signaltechnisch mit der Prozesssteuereinheit verbunden ist, so dass in der Prozesssteuereinheit der erfasste Drehwinkelwert zwecks dessen Verarbeitung und Auswertung zur Verfügung steht.

Bei dieser Auswertung wird aus dem zurückgelegten Drehwinkelwert in Verknüpfung mit der bekannten Gewindesteigung des Gewindebolzens eine Aussage über die bleibende Dehnung und mithin die Längung des Gewindebolzens getroffen. Dieser Längungswert wird in dem Dokumentationsmodul dokumentiert.

Ist der vorgegebene Drehwinkel, entsprechend der Längung des Gewindebolzens, zurückgelegt und wird die Mutter danach mit dem vorgegebenen Drehmoment bis zur Anlage beigetreht, so ist sichergestellt, dass der Gewindebolzen mit der entsprechenden Kraft angezogen wurde.

Unabdingbar ist, dass das Dokumentationsmodul einen Speicher und/oder eine Datenbank umfasst. Auf einem solchen Speicher und/oder einer solchen Datenbank können die Daten der Identifizierung und des Anzugs- und Beidrehvorgangs gespeichert werden, insbesondere die aufgewendete Anzugskraft und/oder der Anzugsdruck, sowie das tatsächlich aufgewendete Handdrehmoment.

Nach einer weiteren bevorzugten Ausgestaltung der Erfindung wird dem Nutzer ein optisches Signal angezeigt, sobald der Anzugs- und Beidrehvorgang abgeschlossen ist.

Weitere Einzelheiten und Vorteile des erfindungsgemäßen Verfahrens ergeben sich aus der nachfolgenden Beschreibung eines in den Figuren dargestellten Ausführungsbeispiels. Es zeigen:
- Fig. 1: eine Darstellung eines zwei Maschinenteile verspannenden Gewindebolzens mit Mutter;
- Fig. 2: in perspektivischer Ansicht eine hydraulisch arbeitende Gewindebolzen-Spannvorrichtung, angesetzt in Fluchtung zu dem Gewindebolzen und abgestützt auf dem oberen Maschinenteil. Dargestellt ist zudem ein Handdrehmomentschlüssel zum Aufschrauben einer Wechselbuchse auf den Gewindebolzen;
- Fig. 3: dieselbe Gewindebolzen-Spannvorrichtung wie in Fig. 2 während des Spannprozesses.
- Fig. 4: dieselbe Gewindebolzen-Spannvorrichtung wie in Fig. 2 und Fig. 3, während des Nachziehens der Mutter mit dem Handdrehmomentschlüssel.

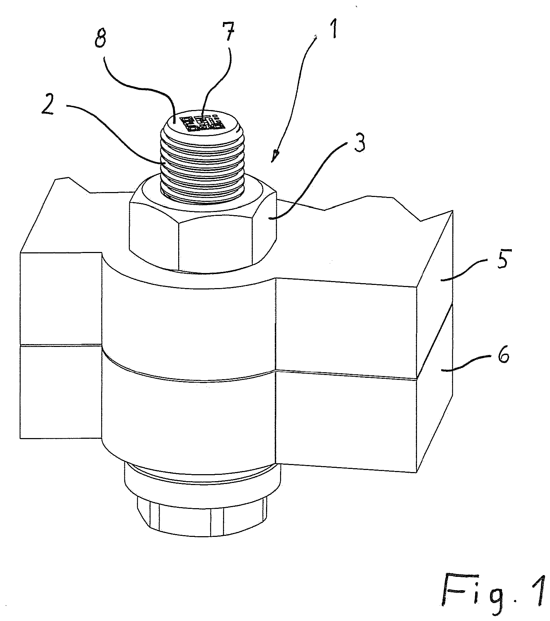

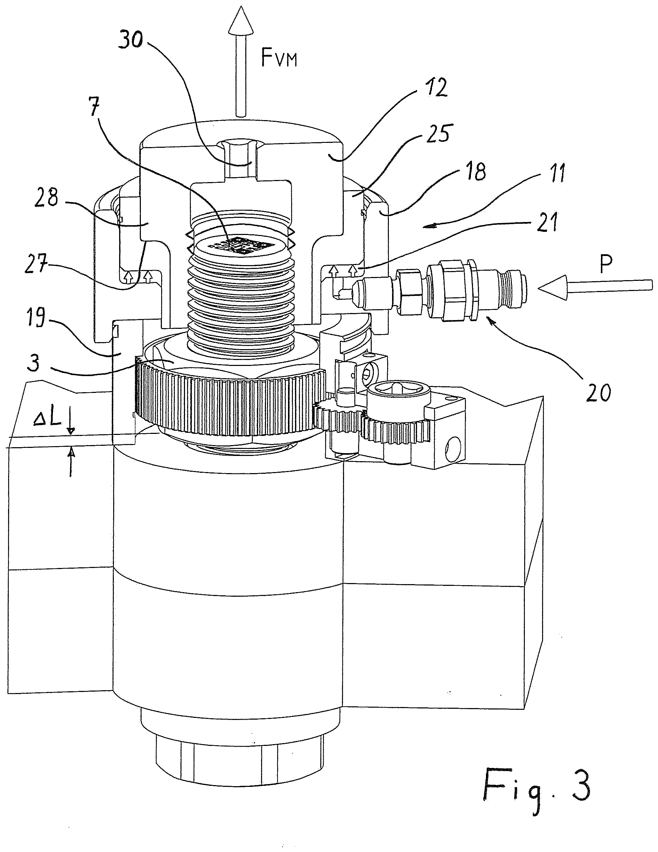

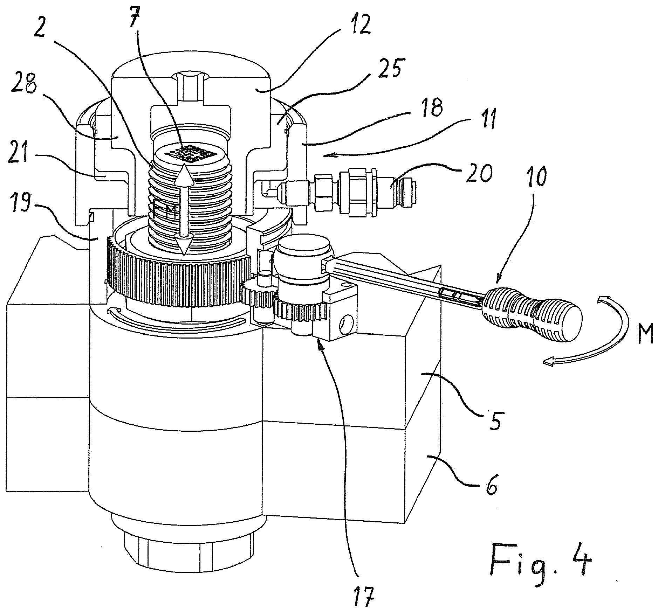

Das erfindungsgemäße Verfahren zum dokumentierten axialen Anziehen oder Nachziehen einer hochbelasteten Schraubverbindung 1 ist in den Figuren 1 bis 4 dargestellt.

Wie Fig. 1 zeigt, bestehen solche Schraubverbindungen 1 aus einem langen Gewindebolzen 2 und einer darauf aufgeschraubten Mutter 3. Die Schraubverbindung 1 verspannt hier zwei Maschinenteile 5, 6 miteinander. Neben dem Gewindebolzen 2 und der Mutter 3 können auch weitere Bauelemente Bestandteil der Schraubverbindung 1 sein, beispielsweise eine weitere Mutter auf der der Mutter 3 abgewandten Seite des weiteren zu verspannenden Maschinenteils 6. Auch Unterlegscheiben sind häufig Bestandteil solcher Schraubverbindungen 1. An der Schraubverbindung 1, also an dem Gewindebolzen 2 oder der Mutter 3, muss für das erfindungsgemäße Verfahren eine Kennung 7 angeordnet sein. In Figur 1 ist dies exemplarisch anhand eines an der Stirnseite 8 des Gewindebolzens 2 bzw. des Gewindebolzenendes angeordneten Barcodes 7 gezeigt. Die Kennung 7 kann jedoch auch an anderen Stellen des Gewindebolzens und/oder der Mutter angeordnet sein.

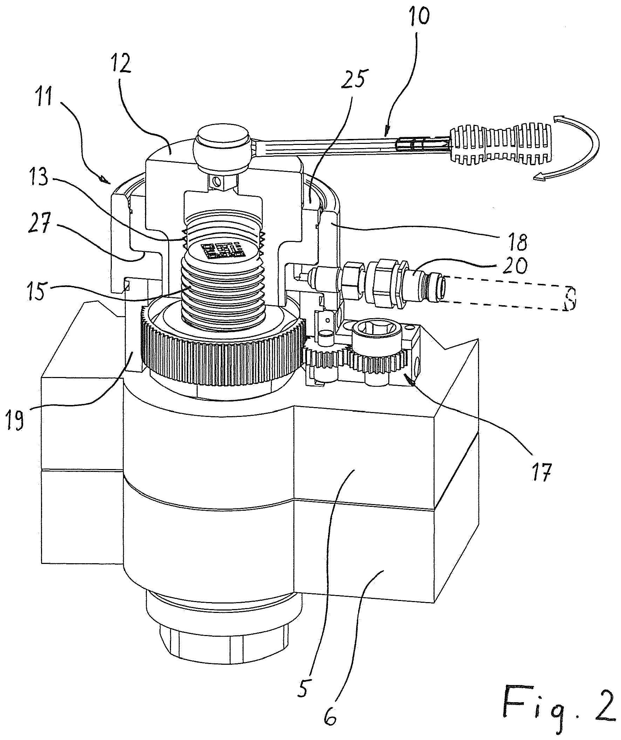

Der Barcode 7 wird zunächst mit einem geeigneten Sensor gescannt. Der Sensor bzw. Scanner kann beispielsweise an einem Handdrehmomentschlüssel 10 (Fig. 2) angeordnet sein, welcher, wie nachfolgend beschrieben, ohnehin im Rahmen des erfindungsgemäßen Verfahrens eingesetzt wird. Auch kann der Sensor bzw. Scanner Teil einer mobilen Recheneinheit, z.B. eines Tablet-Computers, eines Smartphones oder einer verwandten mobilen Recheneinheit sein. Beispielsweise kann der Sensor eine Kamera sein. Auch ein separates Scanmodul, welches ausschließlich zum Scannen der Kennung 7 verwendet wird, kann im Rahmen des erfindungsgemäßen Verfahren eingesetzt werden. Sodann kann der Barcode vor dem eigentlichen An- oder Nachziehen mit dem Sensor erfasst und die Schraubverbindung 1 identifiziert werden.

Auch eine Anordnung des Sensors bzw. Scanners in oder an der Spannvorrichtung 11 selbst ist vorstellbar. Dann wird die Spannvorrichtung 11 auf den zu verspannenden Bolzen 2 aufgesetzt und der Barcode unmittelbar vor der Verspannung gescannt.

Die durch das Scannen gewonnene Information ist die Grundlage zur Identifizierung der Schraubverbindung 1, z.B. des genauen Typs der Schraubverbindung. Sodann wird im nächsten Schritt die Schraubverbindung 1 durch einen ausschließlich axialen Zug am Gewindeende 15 des Gewindebolzens 2 längsgedehnt.

Für diesen Dehnprozess können dem Bediener bzw. Nutzer mittels einer Prozesssteuereinheit für den jeweils identifizierten Typ der Schraubverbindung 1 Verfahrensparameter für das Anziehen bzw. für das Beidrehen vorgeschlagen werden, beispielsweise durch Abrufen von in einer Datenbank abgelegten Datenblättern mit entsprechenden Werten. Der Nutzer kann die Verwendung der ihm so vorgeschlagenen Parameter dann bestätigen, oder ablehnen. Das erfindungsgemäße Verfahren kann auch ohne einen solchen Parametervorschlag durchgeführt werden.

Auch ein automatisiertes Verfahren mit automatischer Druckeinstellung der Pumpe der Hydraulikversorgung, und anschließendem automatischen Beginn des Anzugsvorgangs ist möglich.

Die in Fig. 1 dargestellte, hochbelastete Schraubverbindung 1 wird durch eine rein axial arbeitende, hydraulisch betriebene Spannvorrichtung 11 an- bzw. nachgezogen. Die Spannvorrichtung 11 und der Ablauf des An- und Nachziehens sind in den Figuren 2 bis 4 dargestellt. Durch axialen Zug an dem über die Mutter überstehenden Gewindeende des Gewindebolzens 2 wird die Schraubverbindung 1 längsgedehnt. Die dabei aufgewendete Anzugskraft F_{A} und/oder der mittels der Hydraulik aufgewendete Anzugsdruck P_{A} wird automatisch in dem Dokumentationsmodul gespeichert, und zwar unabhängig davon, ob es sich um eine vom Nutzer nach seinen Erfahrungswerten eingestellte Anzugskraft, oder eine vom System vorgeschlagene, den Werten in einer Datenbank entnommene Anzugskraft Fs und/oder einen gespeicherten Anzugsdruck Ps handelt.

Während mit der Spannvorrichtung 11 für eine gewisse Zeit eine vorgegebene Vorspannkraft F_{VM} auf den Gewindebolzen 2 in Bolzenlängsrichtung ausgeübt wird, kann die auf den Gewindebolzen 2 aufgeschraubte Mutter 3 der Schraubverbindung 1 angezogen bzw. nachgezogen werden. Dies geschieht mittels eines Handdrehmomentschlüssels 10. Das dabei bis zur Auslösung tatsächlich aufgewendete Handdrehmoment M_{H} wird ebenfalls in dem Dokumentationsmodul gespeichert.

Die in den Figuren 2 bis 4 in perspektivischen Schnittansichten dargestellte Spannvorrichtung 11 wird nachfolgend in Bezug auf das erfindungsgemäße Verfahren näher beschrieben. Zu beachten ist, dass die Spannvorrichtung 11 in den Figuren aufgrund der Schnittdarstellung teilweise offen dargestellt ist.

Eine zentral in der Spannvorrichtung 11 angeordnete Wechselbuchse 12 ist an ihrem unteren Ende mit einem Innengewinde 13 versehen. Mit diesem Innengewinde 13 wird die Wechselbuchse 12 vor Beginn des Spannprozesses auf den über die Mutter 3 hinaus vorstehenden Gewindeendabschnitt 15 des Gewindebolzens 2 aufgeschraubt. Dieses Aufschrauben erfolgt vorzugsweise mit dem Handdrehmomentschlüssel 10. Für den eigentlichen Spannprozess wird die so auf den Gewindebolzen 2 aufgeschraubte Wechselbuchse 12 hydraulisch unter axialen Zug gesetzt, wodurch sich der Gewindebolzen 2 in Längsrichtung um die Länge ΔL dehnt. Nun wirkt die Kraft F_{VM} auf den Gewindebolzen 2.

Aufgrund des vorübergehenden Längsdehnens des Bolzens 2 kommt die Unterseite der Mutter 3 frei, so dass sich die Mutter 3 mit zunächst wenig Drehwiderstand und dann zunehmendem Drehwiderstand drehen und auf diese Weise nachziehen lässt. Hilfreich ist hierbei eine um die Mutter herum angeordnete Beidreheinrichtung 17. Diese kann Bestandteil der Spannvorrichtung 11 sein. An die Beidrehvorrichtung 17 wird der Handdrehmomentschlüssel 10 angesetzt.

Umschlossen ist der hydraulische Spannmechanismus von einem druckfesten Zylindergehäuse 18. Die starre Fortsetzung des Zylindergehäuses 18 nach unten bildet ein die Mutter 3 umgebendes Stützrohr 19. Das Stützrohr 19 kann einstückig mit dem Zylindergehäuse 18 sein, oder alternativ ein gegenüber dem Zylindergehäuse 18 separates, z. B. ein daran ansetzbares Bauteil sein. Das Stützrohr 19 ist an seiner Unterseite offen und stützt sich auf einer festen Unterlage ab, z.B. einem Maschinenteil 5, das beim Spannprozess als Widerlager dient. Bei dem hier beschriebenen Verfahren ist das Widerlager jenes Maschinenteil 5, auf dem sich auch die Mutter 3 mit ihrer Unterseite abstützt.

Zum Beidrehen der Mutter 3 kann ein durch eine Öffnung in dem Stützrohr 19 hindurcharbeitendes Getriebe 17 vorhanden sein. Dieses Getriebe bildet die Beidreheinrichtung 17. Das für das Beidrehen benötigte Drehmoment wird durch Hin- und Herbewegen des an das Getriebe 17 ansetzbaren Handdrehmomentschlüssels 10 aufgebracht, bis das eingestellte Drehmoment erreicht ist und der Drehmomentschlüssel 10 auslöst. Die Mutter 3 kann natürlich nur gedreht werden, solange noch die Spannvorrichtung 11 arbeitet.

Seitlich an dem Zylindergehäuse 18 befindet sich ein Hydraulikanschluss 20, über den der hydraulische Arbeitsraum 21 der Spannvorrichtung 11 ventilgesteuert mit einer externen Hydraulikversorgung verbunden ist. Die externe Hydraulikversorgung samt Pumpe kann z. B. auf einem Rollwagen angeordnet sein. In dem Hydraulikzylinder ist, zu der Zylinderinnenwand hin abgedichtet, ein Kolben 25 in Längsrichtung beweglich angeordnet. Durch Einspeisen von hydraulischem Druck in den hydraulischen Arbeitsraum 21 des Zylinders wird der Kolben 25 angehoben. Dies kann beispielsweise entgegen der Kraft einer von oben her den Kolben 25 beaufschlagenden, starken Feder erfolgen, die als Kolbenrückstellfeder dient und den Kolben 25 unmittelbar mit einer Kraft beaufschlagt die bestrebt ist, den Kolben 25 in seiner Grundstellung zu halten, in welcher der hydraulische Arbeitsraum 21 sein Minimum hat. Dies ist in den Figuren nicht dargestellt und optionaler Bestandteil der Spannvorrichtung 10.

Der Kolben 25 umgibt ringförmig die Wechselbuchse 12. Er ist an seinem Innenrand mit einer umlaufenden Stufe 27 versehen, die, der Unterlage abgewandt, eine Mitnehmerfläche bildet, an der sich die Wechselbuchse 12 über einen daran befestigten, radial erweiterten Abschnitt 28 abstützt. Auf diese Weise ist die Wechselbuchse 12 durch den Kolben 25 axial mitnehmbar.

Die Wechselbuchse 12 ist an ihrem bolzenseitigen Ende mit dem Innengewinde 13 zum Aufschrauben auf den Gewindebolzen 2 versehen. An ihrem oberen Ende ist die Wechselbuchse 12 mit einer Nuss 30 versehen, an die sich ein Mehrkant des Handdrehmomentschlüssels 10 ansetzen lässt, um die Wechselbuchse 12 gegenüber dem Zylindergehäuse 18 zu drehen, und zugleich die Wechselbuchse 12 auf den Gewindebolzen 2 aufzuschrauben.

Unter dem hydraulischen Druck in dem Arbeitsraum 21 hebt der Kolben 25 an, wobei er die an der Mitnehmerfläche 27 abgestützte Wechselbuchse 12 axial mitnimmt. Es kommt zu dem Dehnen des Gewindebolzens 2 und dem Bilden eines Spalts ΔL zwischen der Unterseite der Mutter 3 und dem oberen Maschinenelement 5. Der hydraulische Druck kann geräteintern aufgrund des Scannens und somit Identifizierens des Typs der Schraubverbindung 1 und den damit vorgegebenen Kraftwerten, oder aber nach dem Ermessen des Bedieners eingestellt werden.

Das Dehnen des Gewindebolzens kann über geeignete Sensoren erfasst, verarbeitet und gegebenenfalls ebenfalls als ein Prozesswert gespeichert werden. Die Mutter 3 wird dann bei gedehntem Gewindebolzen mit dem Handdrehmomentschlüssel 10 bis zum Erreichen des Drehmoment-Auslösewerts M beigedreht, wozu die Beidrehvorrichtung 17 dient.

Das Beidrehen der Mutter 3 erfolgt mittels des an der Spannvorrichtung 11 angeordneten Getriebes 17. Mindestens eines der sich drehenden Getriebeelemente des Getriebes ist mit einem Drehwinkelsensor versehen. Dieser erfasst einen Drehwinkel, welcher während des Beidrehens zurückgelegt wird.

Der erfasste Drehwinkel kann der Drehwinkel der Mutter 3 selbst sein, oder ein anderer charakteristischer Drehwinkel, den eines der Elemente des Getriebes ausführt. Der so erfasste Winkelwert wird ebenfalls gespeichert, wozu der Drehwinkelsensor signaltechnisch mit der Prozesssteuereinheit verbunden ist, so dass in der Prozesssteuereinheit der erfasste Drehwinkelwert zwecks dessen Verarbeitung und Auswertung zur Verfügung steht.

Bei dieser Auswertung wird aus dem zurückgelegten Drehwinkelwert in Verknüpfung mit der bekannten Gewindesteigung des Gewindebolzens 2 und der Mutter 3 eine Aussage über die bleibende Dehnung und mithin die Längung des Gewindebolzens 2 getroffen. Dieser Längungswert wird in dem Dokumentationsmodul dokumentiert.

Ist der vorgegebene Drehwinkel, entsprechend der Längung des Gewindebolzens 2, zurückgelegt und wird die Mutter 3 danach mit dem vorgegebenen Drehmoment bis zur Anlage beigetreht, so ist sichergestellt, dass der Gewindebolzen 2 mit der entsprechenden Kraft angezogen wurde.

Auch das durch den Handdrehmomentschlüssel 10 aufgebrachte, tatsächlich auf die Mutter 3 wirkende Anzugsmoment M wird durch einen geeigneten Sensor erfasst, z. B. durch einen Drehmomentsensor. Auch dieser Wert wird an die Prozesssteuereinheit übertragen und in dem Dokumentationsmodul gespeichert.

Die Übertragung der beim Beidrehen der Mutter 3 erfassten Daten und Messwerte kann zum Beispiel über eine an dem Handdrehmomentschlüssel 10 angeordnete Sende- und Empfangseinheit oder eine an der Beidrehvorrichtung 17 angeordnete Sende- und Empfangseinheit erfolgen. Diese stehen dann mit der Prozesssteuereinheit in Signalverbindung. In dem Dokumentationsmodul der Prozesssteuereinheit wird das tatsächlich aufgewendete Drehmoment M_{H} gemeinsam mit der aufgewendeten axialen Anzugskraft F_{A} bzw. dem hydraulischen Anzugsdruck P_{A} gespeichert.

Beliebig viele und verschiedene Prozessvariablen können bei entsprechend großem Speicher in dem Dokumentationsmodul abgelegt und/oder verarbeitet werden. Beispielsweise können die Parameter in Datentabellen oder Parameterdateien gespeichert werden, z. B. im Tabellenformat. Diese Daten können dann bei Bedarf, z. B. zu Beweiszwecken, exportiert oder ausgedruckt werden.

### Bezugszeichenliste

- 1: Schraubverbindung
- 2: Gewindebolzen
- 3: Mutter
- 5: Maschinenteil
- 6: Maschinenteil
- 7: Kennung, Barcode
- 8: Stirnseite
- 10: Handdrehmomentschlüssel
- 11: Spannvorrichtung
- 12: Wechselbuchse
- 13: Innengewinde
- 15: Gewindeendabschnitt
- 17: Beidreheinrichtung, Getriebe
- 18: Zylindergehäuse
- 19: Stützrohr
- 20: Hydraulikanschluss
- 21: Arbeitsraum
- 25: Kolben
- 27: Stufe
- 28: radial erweiterter Abschnitt
- 30: Nuss

- M: Handdrehmoment
- ΔL: Länge, Spalt
- P: Druck
- F_{VM}: Kraft

## Patentansprüche

1. Verfahren zum dokumentierten Anziehen oder Nachziehen einer aus einem Gewindebolzen (2) und einer darauf aufgeschraubten Mutter (3) bestehenden, hochbelasteten Schraubverbindung (1) unter Einsatz einer axial arbeitenden, vorzugsweise hydraulisch angetriebenen Spannvorrichtung (11) und einer mit einem Dokumentationsmodul versehenen Prozesssteuereinheit, bei dem
1) die Schraubverbindung (1) durch Scannen einer an der Schraubverbindung (1) vorhandenen Kennung (7), vorzugsweise einer Barcode-Kennung, identifiziert wird und die so ermittelten Daten in dem Dokumentationsmodul gespeichert werden;
2) mittels der Spannvorrichtung (11) die Schraubverbindung (1) durch axialen Zug am Gewindeende (15) des Gewindebolzens (2) längsgedehnt wird und die dabei aufgewendete Anzugskraft (F_{A}) und/oder der Anzugsdruck (P_{A}) in dem Dokumentationsmodul gespeichert wird;
3) nach dem Längsdehnen die Mutter (3) unter Verwendung eines Handdrehmomentschlüssels (10) beigedreht wird, **dadurch gekennzeichnet, dass** das dabei tatsächlich aufgewendete Handdrehmoment (M) in dem Dokumentationsmodul gespeichert wird.

2. Verfahren nach Anspruch 1, **dadurch gekennzeichnet, dass** dem Nutzer nach Identifikation der Schraubverbindung (1) eine in einer Datenbank gespeicherte Anzugskraft (F_{S}) und/oder ein Anzugsdruck (P_{S}) von der Prozesssteuereinheit vorgeschlagen wird, bevor der Anzugsvorgang vom Nutzer gestartet wird.

3. Verfahren nach Anspruch 1, **dadurch gekennzeichnet, dass** nach Identifikation der Schraubverbindung (1) mittels der Prozesssteuereinheit eine in der Datenbank gespeicherte Anzugskraft (F_{S}) und/oder ein Anzugsdruck (P_{S}) automatisch von der Prozesssteuereinheit ausgewählt und eine Pumpe automatisch auf diesen Druck gefahren wird.

4. Verfahren nach Anspruch 1, **dadurch gekennzeichnet, dass** nach Identifikation der Schraubverbindung (1) mittels der Prozesssteuereinheit eine in der Datenbank gespeicherte Anzugskraft (F_{S}) und/oder ein Anzugsdruck (P_{S}) automatisch von der Prozesssteuereinheit ausgewählt und der Anzugsvorgang unter Verwendung der ausgewählten Werte automatisch gestartet wird.

5. Verfahren nach Anspruch 1, **dadurch gekennzeichnet, dass** eine Spannvorrichtung (11) verwendet wird, umfassend ein Zylindergehäuse (18), eine in dem Zylindergehäuse (18) angeordnete Wechselbuchse (12), die an ihrem dem Gewindebolzen (2) zugewandten Ende mit einem Innengewinde (13) versehen und auf den Gewindebolzen (2) aufschraubbar ist, mindestens einen in dem Zylindergehäuse (18) axial bewegbaren, mit dem hydraulischen Druck beaufschlagbaren Kolben (25), durch welchen die Wechselbuchse (12) zentral hindurchführt und vermöge dessen die Wechselbuchse (12) axial mitnehmbar ist.

6. Verfahren nach einem der Ansprüche 1 bis 5, **dadurch gekennzeichnet, dass** die Kennung (7) mit einem Sensor gescannt wird, insbesondere einem Barcodescanner.

7. Verfahren nach einem der Ansprüche 1 bis 6, **dadurch gekennzeichnet, dass** der Sensor Bestandteil der Spannvorrichtung (11), des Handdrehmomentschlüssels (10) oder eines separaten Geräts ist.

8. Verfahren nach einem der Ansprüche 1 bis 7, **dadurch gekennzeichnet, dass** der Sensor Bestandteil einer die Prozesssteuereinheit umfassenden Recheneinheit ist, wobei der Sensor eine Kamera ist.

9. Verfahren nach Anspruch 8, **dadurch gekennzeichnet, dass** die Recheneinheit ein mobiler Computer ist, insbesondere ein Tablet-Computer oder ein Smartphone.

10. Verfahren nach Anspruch 6, **dadurch gekennzeichnet, dass** die Prozesssteuereinheit sowie der Sensor mit einem gemeinsamen Applikationsprogramm gesteuert werden.

11. Verfahren nach Anspruch 6, **dadurch gekennzeichnet, dass** der Sensor signaltechnisch mit der Prozesssteuereinheit verbunden ist.

12. Verfahren nach einem der vorangehenden Ansprüche, **dadurch gekennzeichnet, dass** der Handdrehmomentschlüssel (10) und/oder die Spannvorrichtung (11) mit einer signaltechnisch mit der Prozesssteuereinheit verbundenen Sende- und Empfangseinheit versehen ist/sind, vermöge dessen ein Datenaustausch mit der Prozesssteuereinheit erfolgt.

13. Verfahren nach einem der vorangehenden Ansprüche, **dadurch gekennzeichnet, dass** die Signalverbindung zwischen dem Handdrehmomentschlüssel (10) bzw. der Spannvorrichtung (11) und der Prozesssteuereinheit kabelgebunden oder kabellos erfolgt.

14. Verfahren nach einem der vorangegangenen Ansprüche, **dadurch gekennzeichnet, dass** das Beidrehen der Mutter (3) mittels eines an der Spannvorrichtung (11) angeordneten Getriebes (17) erfolgt, welches mit einem Drehwinkelsensor versehen ist, und dass ein während des Beidrehens durch den Drehwinkelsensor erfasster Drehwinkel ebenfalls in dem Dokumentationsmodul gespeichert wird.

15. Verfahren nach Anspruch 14, **dadurch gekennzeichnet, dass** der Drehwinkelsensor signaltechnisch mit der Prozesssteuereinheit verbunden ist.

16. Verfahren nach einem der vorangehenden Ansprüche, **dadurch gekennzeichnet, dass** das Dokumentationsmodul einen Speicher und/oder eine Datenbank umfasst.

17. Verfahren nach einem der vorangehenden Ansprüche, **dadurch gekennzeichnet, dass** dem Nutzer ein optisches Signal angezeigt wird, sobald der Anzugs- und Beidrehvorgang abgeschlossen ist.

## Claims

1. Method for the documented tightening or tightening up of a heavily loaded screw connection (1), consisting of a threaded bolt (2) and a nut (3) screwed thereon, by using an axially operating, preferably hydraulically driven tensioning device (11) and a process control unit provided with a documentation module, in which
1) the screw connection (1) is identified by scanning an identification (7), preferably a barcode identification, provided on the screw connection (1), and the data thus determined are stored in the documentation module;
2) the screw connection (1) is longitudinally extended by means of the tensioning device (11) by axially pulling on the threaded end (15) of the threaded bolt (2), and the tightening force (F_{A}) and/or the tightening pressure (P_{A}) thereby exerted is/are stored in the documentation module;
3) after the longitudinal extension, the nut (3) is turned by using a hand torque wrench (10), **characterized in that** the hand torque (M) actually exerted thereby is stored in the documentation module.

2. Method according to Claim 1 **characterized in that** after identification of the screw connection (1) the user is offered a tightening force (F_{S}) and/or a tightening pressure (P_{S}) stored in a data bank by the process control unit before the tightening process is started by the user.

3. Method according to Claim 1 **characterized in that** after identification of the screw connection (1) by means of the process control unit a tightening force (Fs) and/or a tightening pressure (Ps) stored in the data bank is automatically selected by the process control unit and a pump is automatically moved to this pressure.

4. Method according to Claim 1 **characterized in that** after identification of the screw connection (1) by means of the process control unit a tightening force (Fs) and/or a tightening pressure (Ps) stored in the data bank is automatically selected by the process control unit and the tightening process is automatically started by using the selected values.

5. Method according to Claim 1 **characterized in that** a tensioning device (11) is used, comprising a cylinder housing (18), an exchangeable bush (12) arranged in the cylinder housing (18) and provided at its end facing the threaded bolt (2) with an internal thread (13) which can be screwed onto the threaded bolt (2), at least one piston (25) which is axially movable in the cylinder housing (18) and can be charged with the hydraulic pressure, through which the exchangeable bush (12) is centrally guided and by means of which the exchangeable bush (12) can be axially entrained.

6. Method according to one of Claims 1 to 5 **characterized in that** the identification (7) is scanned with a sensor, more particularly a barcode scanner.

7. Method according to one of Claims 1 to 6 **characterized in that** the sensor is a constituent part of the tensioning device (11), the hand torque wrench (10) or a separate apparatus.

8. Method according to one of Claims 1 to 7 **characterized in that** the sensor is a constituent part of a computer unit comprising the process control unit, wherein the sensor is a camera.

9. Method according to Claim 8 **characterized in that** the computer unit is a mobile computer, more particularly a tablet computer or a smartphone.

10. Method according to Claim 6 **characterized in that** the process control unit as well as the sensor are controlled with a common application program.

11. Method according to Claim 6 **characterized in that** the sensor is connected by signal processing to the process control unit.

12. Method according to one of the preceding claims **characterized in that** the hand torque wrench (10) and/or the tensioning device (11) is/are provided with a transmitting and receiving unit connected by signal processing to the process control unit, by means of which data exchange with the process control unit takes place.

13. Method according to one of the preceding claims **characterized in that** the signal connection between the hand torque wrench (10) or tensioning device (11) and the process control unit is wireless or by wired link.

14. Method according to one of the preceding claims **characterized in that** turning the nut (3) takes place by means of a gearing (17) which is arranged on the tensioning device (11) and which is provided with a rotary angle sensor, and **in that** a rotary angle detected during turning by the rotary angle sensor is likewise stored in the documentation module.

15. Method according to Claim 14 **characterized in that** the rotary angle sensor is connected by signal processing to the process control unit.

16. Method according to one of the preceding claims **characterized in that** the documentation module comprises a memory and/or a data bank.

17. Method according to one of the preceding claims **characterized in that** an optical signal is displayed to the user as soon as the tightening and turning process is concluded.

## Revendications

1. Procédé destiné à un serrage ou resserrage documenté d'un assemblage vissé (1) fortement sollicité, composé d'un boulon fileté (2) et d'un écrou (3) vissé sur celui-ci, en utilisant un dispositif de serrage (11) à fonctionnement axial, de préférence à commande hydraulique, et une unité de commande de processus munie d'un module de documentation, dans lequel
1) l'assemblage vissé (1) est identifié par la lecture d'un identifiant (7) présent sur l'assemblage vissé (1), de préférence d'un identifiant code à barres, et les données ainsi déterminées sont mémorisées dans le module de documentation ;
2) l'assemblage vissé (1) est allongé longitudinalement au moyen du dispositif de serrage (11) par une traction axiale à l'extrémité de filet (15) du boulon fileté (2), et la force de serrage (F_{A}) exercée et/ou la pression de serrage (P_{A}) est/sont mémorisée(s) dans le module de documentation ;
3) après l'allongement longitudinal, l'écrou (3) est mis en contact en utilisant une clé dynamométrique manuelle (10) ;
**caractérisé en ce que** le couple manuel (M) effectivement exercé est mémorisé dans le module de documentation.

2. Procédé selon la revendication 1, **caractérisé en ce qu'**après l'identification de l'assemblage vissé (1), une force de serrage (Fₛ) et/ou une pression de serrage (Pₛ) mémorisée(s) dans une base de données est/sont proposée(s) à l'utilisateur par l'unité de commande de processus avant que l'utilisateur ne démarre l'opération de serrage.

3. Procédé selon la revendication 1, **caractérisé en ce qu'**après l'identification de l'assemblage vissé (1) au moyen de l'unité de commande de processus, une force de serrage (Fₛ) et/ou une pression de serrage (Pₛ) mémorisée(s) dans la base de données est/sont sélectionnée(s) automatiquement par l'unité de commande de processus, et une pompe est conduite automatiquement jusqu'à cette pression.

4. Procédé selon la revendication 1, **caractérisé en ce qu'**après l'identification de l'assemblage vissé (1) au moyen de l'unité de commande de processus, une force de serrage (Fₛ) et/ou une pression de serrage (Pₛ) mémorisée(s) dans la base de données est/sont sélectionnée(s) automatiquement par l'unité de commande de processus, et l'opération de serrage est démarrée automatiquement en utilisant les valeurs sélectionnées.

5. Procédé selon la revendication 1, **caractérisé en ce qu'**un dispositif de serrage (11) est utilisé, comprenant un corps de cylindre (18), une douille interchangeable (12) disposée dans le corps de cylindre (18), qui est munie d'un taraudage (13) à son extrémité tournée vers le boulon fileté (2) et peut être vissée sur le boulon fileté (2), au moins un piston (25) axialement mobile dans le corps de cylindre (18), pouvant être sollicité par la pression hydraulique, à travers lequel la douille interchangeable (12) est guidée au milieu, et à l'aide duquel la douille interchangeable (12) peut être entraînée axialement.

6. Procédé selon l'une quelconque des revendications 1 à 5, **caractérisé en ce que** l'identifiant (7) est lu à l'aide d'un lecteur, en particulier d'un lecteur de code à barres.

7. Procédé selon l'une quelconque des revendications 1 à 6, **caractérisé en ce que** le lecteur fait partie du dispositif de serrage (11), de la clé dynamométrique manuelle (10) ou est un appareil distinct.

8. Procédé selon l'une quelconque des revendications 1 à 7, **caractérisé en ce que** le lecteur fait partie d'une unité de calcul comprenant l'unité de commande de processus, le lecteur étant une caméra.

9. Procédé selon la revendication 8, **caractérisé en ce que** l'unité de calcul est un ordinateur mobile, en particulier une tablette ou un smartphone.

10. Procédé selon la revendication 6, **caractérisé en ce que** l'unité de commande de processus ainsi que le lecteur sont commandés par un programme d'application commun.

11. Procédé selon la revendication 6, **caractérisé en ce que** le lecteur est relié à l'unité de commande de processus en termes de signal.

12. Procédé selon l'une quelconque des revendications précédentes, **caractérisé en ce que** la clé dynamométrique manuelle (10) et/ou le dispositif de serrage (11) est/sont muni(e)s d'une unité d'émission et de réception reliée à l'unité de commande de processus en termes de signal, au moyen de laquelle un échange de données a lieu avec l'unité de commande de processus.

13. Procédé selon l'une quelconque des revendications précédentes, **caractérisé en ce que** la liaison de signal entre la clé dynamométrique (10) ou le dispositif de serrage (11) et l'unité de commande de processus a lieu avec ou sans fil.

14. Procédé selon l'une quelconque des revendications précédentes, **caractérisé en ce que** la mise en contact de l'écrou (3) est effectuée au moyen d'un système de transmission (17) disposé au niveau du dispositif de serrage (11) et qui est muni d'un capteur d'angle de rotation, et **en ce qu'**un angle de rotation détecté par le capteur d'angle de rotation pendant la mise en contact est également mémorisé dans le module de documentation.

15. Procédé selon la revendication 14, **caractérisé en ce que** le capteur d'angle de rotation est relié à l'unité de commande de processus en termes de signal.

16. Procédé selon l'une quelconque des revendications précédentes, **caractérisé en ce que** le module de documentation comprend une mémoire et/ou une base de données.

17. Procédé selon l'une quelconque des revendications précédentes, **caractérisé en ce qu'**un signal optique est indiqué à l'utilisateur dès que l'opération de serrage et de mise en contact est achevée.
